# EUROPÄISCHE PATENTSCHRIFT

(11) **EP 1 037 296 B1**
(45) Veröffentlichungstag und Bekanntmachung des Hinweises auf die Patenterteilung: **15.12.2004**
(21) Anmeldenummer: 00810140.4
(22) Anmeldetag: 18.02.2000
(51) Int. Cl.: H01M 8/24, H01M 8/02

(54) **Brennstoffzellenbatterie mit Nachverbrennung an der Peripherie eines Zellenstapels**
Fuel cell stack with exhaust gases after-burning region at the periphery of the stack
Batterie de cellules à combustible ayant une région de post-combustion des produits de combustion en périphérie de la batterie

(30) Priorität: 17.03.1999 EP 99810235
(43) Veröffentlichungstag der Anmeldung: 20.09.2000
(73) Patentinhaber: Sulzer Hexis AG, 8400 Winterthur (CH)
(72) Erfinder: Doggwiler, Bruno, 8215 Hallau (CH); Keller, Martin, 8406 Winterthur (CH)
(74) Vertreter: Sulzer Management AG

(56) Entgegenhaltungen:
- EP-A- 0 355 420
- EP-A- 0 450 336
- EP-A- 0 780 917
- WO-A-98/22991

## Beschreibung

Die Erfindung betrifft eine Brennstoffzellenbatterie mit Nachverbrennung an der Peripherie eines Zellenstapels gemäss Oberbegriff von Anspruch 1.

Aus der EP-A 0 580 918 ist eine Vorrichtung mit Hochtemperatur-Brennstoffzellen bekannt, die einen zentralsymmetrischen Zellenstapel und eine wärmedämmende Hülle umfasst. Ein Nachverbrennungsraum liegt zwischen dem Zellenstapel und der Hülle. An der Peripherie des Stapels sind Luftzufuhrleitungen für die Brennstoffzellen angeordnet, die den Nachverbrennungsraum an einer Vielzahl von Stellen durchqueren.

Jede Brennstoffzelle umfasst zwei Teile, nämlich einen scheibenförmigen Interkonnektor und ein sogenanntes PEN (abgeleitet von: Positive Elektrode / Feststoff-Elektrolyt / Negative Elektrode). Das PEN ist ein elektrochemisch aktives Element, das in Form einer dünnen Feststoffelektrolyt-Platte mit zwei Elektrodenschichten zwischen Interkonnektoren angeordnet ist. Der Interkonnektor stellt zwischen PEN-Elektroden benachbarter Zellen elektrische Verbindungen her. Er enthält ein Kanalsystem für gasförmige Fluide, über das einerseits ein Brenngas von einer zentralen Eintrittsstelle entlang dem PEN zur Peripherie des Zellenstapels transportiert wird und andererseits Luft oder ein Sauerstoff enthaltendes Gas von den Lufträumen zum Zentrum - zwecks eines weiteren Aufheizens der Luft - und von dort entlang dem PEN zurück zur Peripherie transportiert wird.

Die Luftzufuhrleitungen zu den Zellen verursachen aufgrund ihrer grossen Anzahl beträchtliche Kosten. Es ist Aufgabe der Erfindung, eine Brennstoffzellenbatterie zu schaffen, die bezüglich der Lufteinspeisung in die Brennstoffzellen kostengünstiger ist. Diese Aufgabe wird durch die im Anspruch 1 definierte Brennstoffzellenbatterie gelöst.

Die Brennstoffzellenbatterie wird mit einer Nachverbrennung an der Peripherie eines Zellenstapels betrieben. Jede Zelle der Batterie weist mindestens eine Eintrittsstelle für Luft oder ein anderes Sauerstoff enthaltendes Gas auf. Innerhalb eines ringförmigen Raums um den Zellenstapel ist die Nachverbrennung vorgesehen. Die genannten Eintrittsstellen sind als Gesamtheit oder jeweils gruppenweise über mindestens einen Luftraum, der sich axial entlang des Zellenstapels erstreckt und der in unmittelbarem Kontakt mit diesem steht, kommunizierend verbunden. Jeder Luftraum ist von einem Nachverbrennungsraum, der ebenfalls einen axial entlang des Zellenstapels kommunizierenden Raum bildet, durch mindestens eine Wand getrennt.

Die abhängigen Ansprüche 2 bis 10 beziehen sich auf vorteilhafte Ausführungsformen der erfindungsgemässen Brennstoffzellenbatterie. Für eine dieser Ausführungsformen sind die Interkonnektoren zweilagig ausgebildet. Jede Lage des Interkonnektors besteht aus einem geformten und beschichteten Grundkörper, der ein zumindest angenähert gleiches Wärmeausdehnungsverhalten wie das PEN hat und der aus einem metallischen Pulver weitgehend in die Form des Fertigteils gesintert worden ist. Zwei derartige Lagen werden beispielsweise durch Löten zu einer Einheit zusammengefügt. Die Kanäle der Interkonnektoren, auf dessen beiden Seiten jeweils ein PEN die dort offenen Kanäle überdeckt, haben beispielsweise eine Spiralform, und zwar derart, dass im Betrieb der Batterie die PEN-Elektroden weitgehend gleichmässig von den gasförmigen Fluiden (Brenngas und Luft oder Sauerstoff enthaltendes Gas) überstrichen werden.

Die Interkonnektoren und PEN sind als Einzelteile zu einem Stapel - eine alternierenden Abfolge bildend - aufgeschichtet. Dieser Zellenstapel wird mittels Spannmittel, beispielsweise Zugstangen, in Richtung der Stapelachse zusammengepresst. An der Peripherie des Zellenstapels befinden sich diskret angeordnete Öffnungen für den Eintritt bzw. Austritt der gasförmigen Fluide. Die Positionen dieser Öffnungen sind durch die Ausgestaltung der Kanäle und die erfindungsgemäss vorgesehene Zu- bzw. Abführung der Fluide festgelegt. Die Öffnungen können entsprechend in den gesinterten Interkonnektorlagen vorgeformt werden. Die Herstellung der Interkonnektoren 22 mittels Sinterns ermöglicht eine sehr hohe Massgenauigkeit. Es sind daher an den Stossstellen zwischen den Interkonnektoren 22 und den PEN-Platten im Zellenstapel 2 Kontakte möglich, die ausreichend dicht gegenüber einem radialen Durchtritt von Luft bzw. Gas sind.

Wie bereits bei der bekannten Batterie der EP-A 0 580 918 kann die Hülle als Wärmedämmsystem ausgebildet werden, so dass die Hülle neben ihrer wärmedämmenden Funktion die Rolle eines externen Rekuperators übernimmt: Statt dass die in den Zellen für die elektrochemischen Prozesse benötigte Luft zuerst in einem separaten externen Rekuperator vorerhitzt wird, wird die Luft als Wärmesenke verwendet, indem die aus dem Zellenstapel wegfliessende Wärme in der Hülle zumindest teilweise aufgefangen und wieder zum Reaktionsort zurückgeführt wird.

Die bekannte Hülle ist mehrlagig ausgebildet; sie weist ein Kanalsystem für den Luftstrom auf. Zwischen einer äusseren Wand, die eine erste Lage der Hülle bildet, und den inneren Teilen der Hülle liegt ein erster Hohlraum, in welchem eine Kühlung der Hülle durch die Luft erfolgt. In dem Kanalsystem, das an den ersten Hohlraum anschliesst, ergibt sich eine weitere Erwärmung der Luft. Anstelle oder zusätzlich zu den Kanälen können auch poröse, luftdurchlässige Teile in der Hülle eingebaut sein.

Nachfolgend wird die Erfindung anhand der Zeichnungen erläutert. Es zeigen:
- Fig. 1: eine Brennstoffzellenbatterie mit einem zentralsymmetrischen Zellenstapel,
- Fig. 2: ein Bruchstück von einem Interkonnektor der erfindungsgemässen Brennstoffzellenbatterie,
- Fig. 3: einen Querschnitt durch die Batterie,
- Fig. 4: ein Bruchstück von einem Zellenstapel der erfindungsgemässen Batterie und
- Fig. 5: ein mäanderförmiges Kanalsystem für einen Interkonnektor.

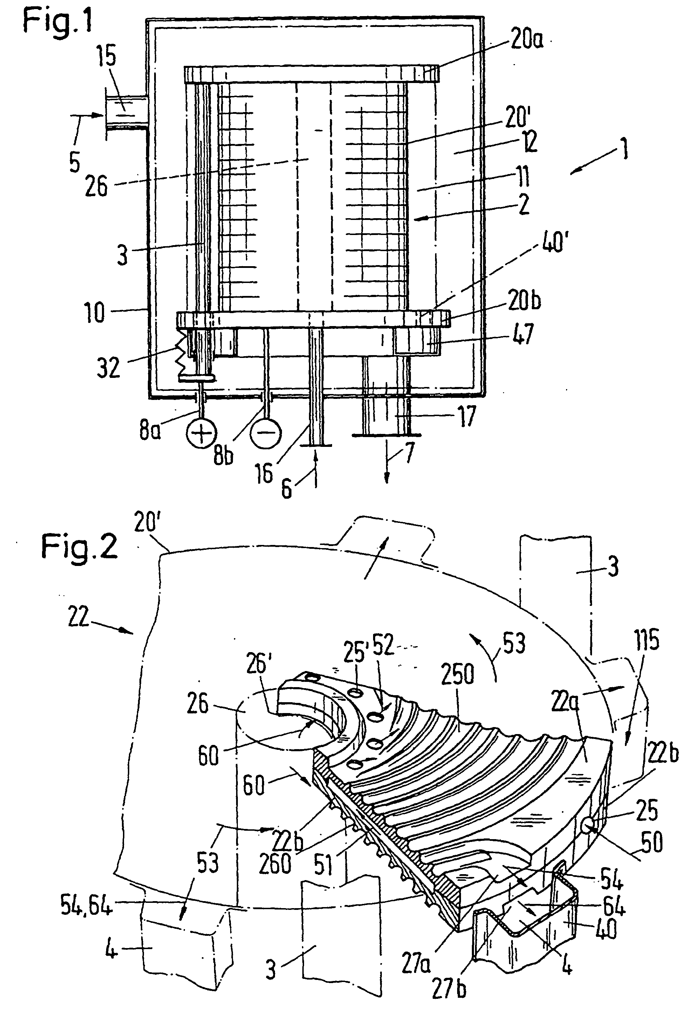

Die in Fig. 1 dargestellte Brennstoffzellenbatterie 1 umfasst folgende Komponenten: Einen Zellenstapel 2 zwischen einer Deckplatte 20a und einer Bodenplatte 20b, die als elektrische Pole der Batterie 1 ausgebildet sind; einen ringförmigen Raum 11 an der Peripherie 20' des Zellenstapels 2, innerhalb dem eine Nachverbrennung vorgesehen ist; eine wärmedämmende Hülle 12, von der nur die Umrisse strichpunktiert gezeichnet sind; eine äussere Wand 10 der Batterie 1 mit einem Stutzen 15 für die Zufuhr von Luft 5 oder von einem Sauerstoff enthaltenden Gas 5; eine Einspeiseleitung 16 für einen fluidförmigen Brennstoff 6, der längs eines zentralen Kanals 26 - gegebenenfalls nach einer Vergasung und/oder Reformierung - gasförmig auf die einzelnen Zellen verteilt wird; ein ringförmiger Sammelkanal 47 für ein Abgas 7, das über einen Stutzen 17 aus der Batterie 1 abgezogen werden kann; ferner Stangen 3 (nur eine sichtbar) und Zugfedern 32, mit denen die beiden Platten 20a und 20b gegeneinander gezogen werden können. Kammern 4 (siehe Figuren 2 und 4) für die Nachverbrennung, die im Ringraum 11 angeordnet sind, aber in Fig. 1 nicht dargestellt sind, stehen über Durchbrüche 40' in der Bodenplatte 20b mit dem Sammelkanal 47 in Verbindung. Der in der Batterie erzeugte elektrische Strom kann über Anschlüsse 8a und 8b abgenommen werden, wobei die Stange 3 zusätzlich zu ihrer Funktion als Spannmittel auch als elektrische Verbindung zur Deckplatte 20a verwendet wird.

Jede Zelle umfasst einen scheibenförmigen Interkonnektor 22 - siehe Fig. 2 - und ein PEN 21 (siehe Fig. 4), das ein elektrochemisch aktives Element in Form einer dünnen Platte ist und aus einem Feststoffelektrolyten sowie zwei durch Beschichten aufgebrachte Elektroden besteht. Der Interkonnektor 22 ist aus zwei Lagen 22a und 22b zusammengesetzt. Er enthält ein Kanalsystem 250, 260, über das einerseits Brenngas 60 von einer zentralen Eintrittstelle 26' entlang dem PEN zur Peripherie 20' transportiert wird - Pfeile 60 und 64 - und andererseits Luft 50 (oder Sauerstoff enthaltendes Gas) von Lufträumen 115 an der Peripherie 20' zum Zentrum 26, dort durch Löcher 25' und anschliessend entlang dem PEN 21 wieder zurück zur Peripherie 20' transportiert wird: Pfeile 51, 52, 53 und 54. An der Peripherie 20' des Zellenstapels 2 befinden sich diskret angeordnete Eintrittsöffnungen 25 für die Luft 50 und Austrittsöffnungen 27a, 27b für die bei Elektrodenreaktionen genutzten Gasen 54 und 64.

Die Deckplatte 20a und die Bodenplatte 20b sind Stromsammlerplatten. Zwischen dem obersten bzw. untersten PEN 21 und der entsprechenden Stromsammlerplatte 20a, 20b sind mit Vorteil Elektrodenendplatten, nämlich eine Kathoden- bzw. eine Anodenendplatte, eingelegt, die jeweils einen Abschluss des Zellenstapels bilden. Die Kontaktflächen zwischen den Stromsammlerplatten und den Elektrodenendplatten werden mit Beschichtungen versehen, die gegen Oxidation schützen, die eine langzeitbeständige elektrische Leitung gewährleisten und die eine lösbare Verbindung der Stromsammlerplatten 20a, 20b ermöglichen. Zur Beschichtung kann ein thermisch aufspritzbarer Perowskit (LSM) verwendet werden.

Die Gas- bzw. Luftkanäle 260, 250 des Interkonnektors 22, auf dessen beiden Seiten jeweils ein PEN 21 eine Abdeckung bildet, haben eine Spiralform, so dass im Betrieb der Batterie 1 die PEN-Elektroden weitgehend gleichmässig von dem Gas 60 bzw. der Luft 53 überstrichen werden.

Jede Lage 22a, 22b des Interkonnektors 22 besteht aus einem gesinterten und beschichteten Grundkörper, der ein zumindest angenähert gleiches Wärmeausdehnungsverhalten wie das PEN hat (vgl. europäische Patentanmeldung Nr. 98810125.9). Zwei derartige Lagen 22a und 22b sind zu einem Interkonnektor zusammengefügt. Die Interkonnektoren sind derart geformt, dass sich die Öffnungen 25, 27a und 27b für den Eintritt bzw. Austritt der Gase an geeigneten Stellen - nämlich gemäss der Erfindung - ergeben: Die Luft-Eintrittsstellen 25 sind gruppenweise über mindestens einen Luftraum 115, der sich axial entlang des Zellenstapels 2 erstreckt und der in unmittelbarem Kontakt mit diesem steht, kommunizierend verbunden. Dabei ist jeder Luftraum 115 von Nachverbrennungsräumen 4, die ebenfalls axial entlang des Zellenstapels kommunizierende Räume bilden, durch Wände 40 getrennt. Folglich werden keine einzelnen Luftzuführleitungen benötigt, mit denen ein zusammenhängend ringförmiger Nachverbrennungsraum zu durchqueren ist. Somit entfallen die Kosten für solche einzelnen Luftleitungen.

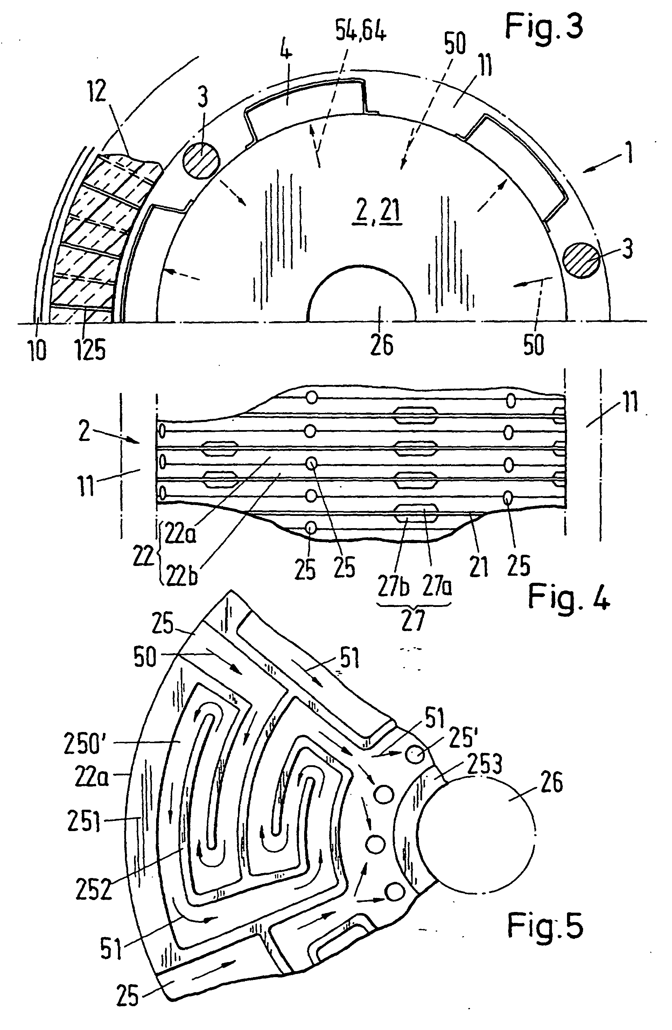

Im Querschnitt durch die erfindungsgemässe Batterie 1 der Fig. 3 ist ein den ringförmigen Raum 11 umschliessendes Wärmedämmsystem als Teilstück gezeigt. Es umfasst die äussere Wand 10 - im dargestellten Beispiel eine Doppelwand, die ein Vakuum enthalten kann - sowie eine Lage 12 aus einem wärmedämmenden Material, in der radiale Kanäle 125 für einen Luftdurchlass angeordnet sind. Die Lage 12 kann auch aus einem porösen, gleichmässig luftdurchlässigen Material bestehen, so dass die Kanäle 125 wegfallen können. In Fig. 3 sind auch ein PEN 21 des Zellenstapels 2 mit dem zentralen Gasverteilkananl 26, Nachverbrennungskammern 4 und zwischen diesen angeordnete Spannstangen 3 erkennbar. Mit gestrichelten Pfeilen ist die Zufuhr von frischer, vorerwärmter Luft 50 und der Austritt von Luft 54 sowie Gas 64 nach deren Nutzung bei den stromliefernden Elektrodenreaktionen angedeutet.

Eine als Fragment dargestellte Seitenansicht des Zellenstapels 2 zeigt die in vertikalen Gruppen angeordneten Öffnungen 25 für die Luftzufuhr und die Öffnungen 27a und 27b für die Abgabe von Luft bzw. Gas. Die Öffnungen 25 befinden sich jeweils an der Grenze zwischen den beiden Lagen 22a und 22b der Interkonnektoren 22. Die Öffnungen 27a und 27b sind jeweils auf den beiden Seiten eines PEN 21 angeordnet, so dass sie Doppelöffnungen 27 bilden. Die äussere Grenze des ringförmigen Raums 11 ist strichpunktiert angedeutet.

Beim Interkonnektor 22 der Fig. 2 sind die an die PEN-Platten angrenzenden Kanäle 250 bzw. 260 spiralförmig. Der Hohlraum für die Luft 51, die von den Öffnungen 25 einwärts zu den Durchtrittslöcher 25' fliesst, kann auch eine Kanalstruktur enthalten, beispielsweise in Mäanderform, wie es in Fig. 5 gezeigt ist. Die Luft 50, 51 wird durch Kanäle 250' zwischen Rippen 252 geführt. Ein äusserer Rand 251, die Rippen 252 und ein Rand 253 beim zentralen Gaskanal 26 bilden Oberflächen, die in einer gemeinsamen Ebene liegen. Die eine Lage 22a kann an den Rändern 251 und 253 mit ihrer Partnerlage 22b mittels Lötens zusammengefügt werden. Für die äusseren Kanäle 250 und 260 kann ebenfalls eine Mäanderform vorgesehen sein.

Das Kanalsystem in den Interkonnektoren kann auch so gestaltet werden, dass nur über eine vertikale Gruppe von Öffnungen 25 die Luft 50 in den Zellenstapel 2 eingespeist wird. Entsprechendes gilt für die Doppelöffnungen 27 für Luft- und Gasaustritte in den Nachverbrennungsraum 4. In diesen Fällen wird lediglich ein Nachverbrennungsraum benötigt.

## Patentansprüche

1. Brennstoffzellenbatterie mit Nachverbrennung an der Peripherie (20') eines Zellenstapels (2), in welcher Batterie (1) jede Zelle mindestens eine Eintrittsstelle (25) für Luft (5, 50) oder ein anderes Sauerstoff enthaltendes Gas aufweist und innerhalb eines ringförmigen Raums (11) um den Zellenstapel die Nachverbrennung vorgesehen ist, **dadurch gekennzeichnet, dass** die genannten Eintrittsstellen (25) als Gesamtheit oder jeweils gruppenweise über mindestens einen Luftraum (115), der sich axial entlang des Zellenstapels (2) erstreckt und der in unmittelbarem Kontakt mit diesem steht, kommunizierend verbunden sind und dass jeder Luftraum von einem Nachverbrennungsraum (4), der ebenfalls einen axial entlang des Zellenstapels kommunizierenden Raum bildet, durch mindestens eine Wand (40) getrennt ist.

2. Brennstoffzellenbatterie nach Anspruch 1, **dadurch gekennzeichnet, dass** jede Zelle zwei Teile umfasst, nämlich einen scheibenförmigen Interkonnektor (22) und ein sogenanntes PEN (21), das ein elektrochemisch aktives Element in Form einer dünnen Platte aus einem Feststoffelektrolyten und zwei durch Beschichten aufgebrachten Elektroden ist, dass der Interkonnektor (22a, 22b) zweilagig aufgebaut ist und ein Kanalsystem (250', 250, 260) enthält, über das einerseits ein Brenngas (6, 60) von einer zentralen Eintrittstelle (26, 26') entlang dem PEN (21) zur Peripherie (20') transportierbar ist und andererseits die Luft (5) oder das Sauerstoff enthaltende Gas von den Lufträumen zum Zentrum (26) und von dort entlang dem PEN zurück zur Peripherie transportierbar ist, wobei an der Peripherie des Zellenstapels (2) diskret angeordnete Öffnungen (25, 27a, 27b) für den Eintritt bzw. Austritt der Gase durch die Interkonnektoren (22) gebildet sind.

3. Brennstoffzellenbatterie nach Anspruch 2, **dadurch gekennzeichnet, dass** die Gas- bzw. Luftkanäle (260, 250) des Interkonnektors (22), auf dessen beiden Seiten jeweils ein PEN (21) die dort offenen Kanäle überdeckt, eine Spiral- oder Mäanderform haben, so dass im Betrieb der Batterie die PEN-Elektroden weitgehend gleichmässig von den Gasen bzw. der Luft überstrichen werden.

4. Brennstoffzellenbatterie nach Anspruch 2 oder 3, **dadurch gekennzeichnet, dass** jede Lage (22a, 22b) des Interkonnektors (22) aus einem geformten und beschichteten Grundkörper besteht, der ein zumindest angenähert gleiches Wärmeausdehnungsverhalten wie das PEN (2) hat und der aus einem metallischen Pulver weitgehend in die Form des Fertigteils gesintert ist, und dass zwei derartige Lagen zu einem Interkonnektor zusammengefügt sind.

5. Brennstoffzellenbatterie nach Anspruch 4, **dadurch gekennzeichnet, dass** die Interkonnektoren (22) und PEN (21) als Einzelteile zum Zellenstapel (2) in einer alternierenden Anordnung aufgeschichtet sind und dass der Zellenstapel durch Spannmittel (3) in axialer Richtung zusammengepresst ist.

6. Brennstoffzellenbatterie nach einem der Ansprüche 1 bis 5, **dadurch gekennzeichnet, dass** über den ringförmigen Raum (11) um den Zellenstapel (2) die Luft (5) oder das Sauerstoff enthaltende Gas in den Zellenstapel eingespeist wird und dass eine Mehrzahl von kanalförmigen Nachverbrennungsräumen (4) den ringförmigen Raum in weitgehend gleich breite Lufträume (115) gliedert.

7. Brennstoffzellenbatterie nach Anspruch 6, **dadurch gekennzeichnet, dass** in allen oder einzelnen der Lufträume (115) axiale Stangen (3) angeordnet sind, mittels derer der Zellenstapel (3) zusammengespannt ist.

8. Brennstoffzellenbatterie nach Anspruch 7, **dadurch gekennzeichnet, dass** mindestens eine der axialen Stangen (3) als Stromleiter für den in der Batterie erzeugten elektrischen Gleichstrom ausgebildet ist.

9. Brennstoffzellenbatterie nach einem der Ansprüche 1 bis 8, **dadurch gekennzeichnet, dass** die Zellen kreisförmig sind und das Brenngas (6) über einen Kanal (26), der durch zentrale Durchbrüche der Zellen gebildet ist, auf die einzelnen Zellen verteilbar ist.

10. Brennstoffzellenbatterie nach einem der Ansprüche 1 bis 9, **dadurch gekennzeichnet, dass** zwischen einer äusseren Wand (10) der Batterie (1) und dem ringförmigen Raum (11) um den Zellenstapel (2) ein Wärmedämmsystem (12) angeordnet ist, in das Kanäle (125) für die Luft (5) integriert sind und/oder in dem poröse, luftdurchlässige Teile enthalten sind, derart, dass im Betrieb der Batterie die durch das Wärmedämmsystem inwärts strömende Luft durch Wärmeaufnahme einen Rücktransport von Wärme zum Zellenstapel ermöglicht, und dass insbesondere für die das Wärmedämmsystem durchströmende Luft sich eine gleichmässige Verteilung auf die einzelnen Lufträume (115) an der Peripherie (20') des Zellenstapels ergibt, wobei anstelle der Luft auch ein anderes Sauerstoff enthaltendes Gas vorgesehen sein kann.

## Claims

1. Fuel cell battery with afterburning at the periphery (20') of a cell stack (2), in said battery (1) each cell having at least one entry point (25) for air (5, 50) or another gas containing oxygen and with the afterburning being provided inside a ring-shaped space (11) around the cell stack,
**characterised in that** the named entry points (25) are communicatingly connected as a totality or in each case group-wise via at least one air space (115) which extends axially along the cell stack (2) and which stands in direct contact with the latter; and **in that** each air space is separated by at least one wall (40) from an afterburner chamber (4), which likewise forms a space which communicates axially along the cell stack.

2. Fuel cell battery in accordance with claim 1, **characterised in that** each cell comprises two parts, namely a disc-shaped interconnector (22) and a so-called PEN (21), which is an electrochemically active element in the form of a thin plate of a solid electrolyte and two electrodes which are applied by coating; **in that** the interconnector (22a, 22b) is built up in two layers and contains a passage system (250', 250, 260) via which, on the one hand, a fuel gas (6, 60) can be transported from a central entry point (26, 26') along the PEN (21) to the periphery (20') and, on the other hand, the air (5) or the gas containing oxygen can be transported from the air spaces to the centre (26) and from there along the PEN back to the periphery, with discretely arranged openings (25, 27a, 27b) being formed at the periphery of the cell stack (2) for the respective entry or outflow of the gases through the interconnectors (22).

3. Fuel cell battery in accordance with claim 2, **characterised in that** the respective gas or air passages (260, 250) of the interconnector (22), on both sides of which a PEN (21) in each case covers over the passages which are open there, have a spiral or meander shape so that during the operation of the battery the PEN electrodes are largely uniformly swept over by the gases or the air respectively.

4. Fuel cell battery in accordance with claim 2 or claim 3, **characterised in that** each layer (22a, 22b) of the interconnector (22) consists of a shaped and coated basic body which has a thermal expansion behaviour which is at least approximately similar to that of the PEN (2) and which is largely sintered from a metallic powder into the form of a finished part; and **in that** two layers of this kind are assembled to form an interconnector.

5. Fuel cell battery in accordance with claim 4, **characterised in that** the interconnectors (22) and PENs (21) are stacked up as individual parts in an alternating arrangement to form the cell stack (2); and **in that** the cell stack is pressed together in the axial direction by clamping means (3).

6. Fuel cell battery in accordance with any one of the claims 1 to 5, **characterised in that** the air (5) or the gas containing oxygen is fed in into the cell stack via the ring-shaped space (11) around the cell stack (2); and **in that** a plurality of passage-shaped afterburner chambers (4) subdivides the ring-shaped space into largely equally wide air spaces (115).

7. Fuel cell battery in accordance with claim 6, **characterised in that** axial bars (3) by means of which the cell stack (3) is clamped together are arranged in all or in individual ones of the air spaces (115).

8. Fuel cell battery in accordance with claim 7, **characterised in that** at least one of the axial bars (3) is designed as a current conductor for the d.c. electrical energy which is generated in the battery.

9. Fuel cell battery in accordance with any one of the claims 1 to 8, **characterised in that** the cells are circular and the fuel gas (6) can be distributed to the individual cells via a passage (26) which is formed by central apertures of the cells.

10. Fuel cell battery in accordance with any one of the claims 1 to 9, **characterised in that** a heat insulating system (12) is arranged between the outer wall (10) of the battery (1) and the ring-shaped space (11) around the cell stack (2), with passages (125) for the air (5) being integrated into the heat insulating system and/or with porous, air-permeable parts being contained in the heat insulating system in such a manner that during the operation of the battery the air flowing inwardly through the heat insulating system enables a backward transporting of heat to the cell stack through the absorption of heat; and **in that**, in particular for the flows through the heat insulating system, a uniform distribution of the air to the individual air spaces (115) at the periphery (20') results, with it also being possible for another gas containing oxygen to be provided instead of air.

## Revendications

1. Batterie de cellules à combustible ayant une région de post-combustion à la périphérie (20') d'une pile de cellules (2), batterie (1) dans laquelle chaque cellule présente au moins un emplacement d'entrée (25) pour l'air (5, 50) ou un autre gaz contenant de l'oxygène, et où est prévu à l'intérieur d'une enceinte annulaire (11) autour de la pile de cellules la post-combustion, **caractérisée en ce que** les emplacements d'entrée cités (25) sont reliés de manière communicante en tant qu'ensemble ou respectivement par groupes par au moins une enceinte d'air (115), qui s'étend axialement le long de la pile de cellules (2) et qui est en contact direct avec celle-ci, et **en ce que** chaque enceinte d'air est séparée d'une enceinte de post-combustion (4), qui forme également une enceinte communiquant axialement le long de la pile de cellules, par au moins une paroi (40).

2. Batterie de cellules à combustible selon la revendication 1, **caractérisée en ce que** chaque cellule comporte deux parties, à savoir un interconnecteur (22) en forme de disque et un soi-disant PEN (21), qui est un élément électrochimiquement actif sous la forme d'une plaque mince en un électrolyte solide et deux électrodes appliquées par couchage, **en ce que** l'interconnecteur (22a, 22b) est réalisé en deux couches et comporte un système de canaux (250', 250, 260) par lequel, d'une part, un gaz de combustion (6, 60) peut être transporté d'un emplacement d'entrée central (26, 26') le long du PEN (21) à la périphérie (20') et, d'autre part, l'air (5) ou le gaz contenant de l'oxygène peut être transporté des enceintes d'air vers le centre (26) et de là le long du PEN de nouveau à la périphérie, où sont formées à la périphérie de la pile de cellules (2) des ouvertures disposées de manière discrète (25, 27a, 27b) pour l'entrée respectivement la sortie des gaz à travers les interconnecteurs (22).

3. Batterie de cellules à combustible selon la revendication 2, **caractérisée en ce que** les canaux de gaz, respectivement d'air (260, 250) de l'interconnecteur (22), aux deux côtés duquel respectivement un PEN (21) recouvre les canaux y ouverts, ont une forme en spirale ou en méandre de sorte que lors du fonctionnement de la batterie, les gaz respectivement l'air passent sensiblement régulièrement sur les électrodes PEN.

4. Batterie de cellules à combustible selon la revendication 2 ou 3, **caractérisée en ce que** chaque couche (22a, 22b) de l'interconnecteur (22) est constituée d'un corps de base formé et revêtu, qui a un comportement de dilatation thermique au moins à peu près identique à celui du PEN (2) et qui est fritté à partir d'une poudre métallique dans une grande mesure dans la forme de la pièce finie, et **en ce que** deux de ces couches sont assemblées pour former un interconnecteur.

5. Batterie de cellules à combustible selon la revendication 4, **caractérisée en ce que** les interconnecteurs (22) et PEN (21), en tant que parties individuelles, sont empilés pour former la pile de.cellules (2), selon un agencement alternant, et **en ce que** la pile de cellules est comprimée par des moyens de serrage (3) dans la direction axiale.

6. Batterie de cellules de combustible selon l'une des revendications 1 à 5, **caractérisée en ce que** par l'enceinte annulaire (11) autour de la pile de cellules (2), l'air (5) où le gaz contenant l'oxygène est introduit dans la pile de cellules, et **en ce qu'**une pluralité d'enceintes de post-combustion (4) en forme de canaux divise l'enceinte annulaire en des enceintes d'air (115) sensiblement de même largeur.

7. Batterie de cellules à combustible selon la revendication 6, **caractérisée en ce que** dans tout ou dans quelques-uns des enceintes d'air (115), des tiges axiales (3) sont disposées au moyen desquelles la pile de cellules (3) est resserrée.

8. Batterie de cellules à combustible selon la revendication 7, **caractérisée en ce qu'**au moins l'une des tiges axiales (3) est réalisée comme conducteur de courant pour le courant continu électrique produit dans la batterie.

9. Batterie de cellules à combustible selon l'une des revendications 1 à 8, **caractérisée en ce que** les cellules sont de forme circulaire, et que le gaz de combustion (6) peut être réparti par un canal (26), qui est formé par des perçages centraux des cellules, aux cellules individuelles.

10. Batterie de cellules à combustible selon l'une des revendications 1 à 9, **caractérisée en ce qu'**il est disposé entre une paroi extérieure (10) de la batterie (1) et l'enceinte annulaire (11) autour de la pile de cellules (2), un système calorifuge (12) dans lequel sont intégrés des canaux (125) pour l'air (5) et/ou dans lequel se trouvent des parties poreuses, perméables à l'air de telle sorte qu'en cours de fonctionnement de la batterie, l'air s'écoulant à travers le système calorifuge vers l'intérieur permet par absorption de chaleur, le transport en retour de la chaleur à la pile de cellules, et **en ce qu'**on obtient en particulier pour l'air traversant le système calorifuge, une répartition uniforme aux enceintes d'air individuelles (115) à la périphérie (20') de la pile de cellules, où à la place de l'air, également un autre gaz contenant de l'oxygène peut être prévu.
